# EUROPEAN PATENT APPLICATION

(11) **EP 2 386 991 A1**
(43) Date of publication of application: **16.11.2011**
(21) Application number: 11162341.9
(22) Date of filing: 13.04.2011
(51) Int. Cl.: G06Q 10/00

(54) **Plant operation management - support system**

(30) Priority: 10.05.2010 JP 2010107825
(71) Applicant: Yokogawa Electric Corporation, Tokyo 180-8750 (JP)
(72) Inventor: Ishikawa, Makio, Tokyo 180-8750 (JP)
(74) Representative: Henkel, Breuer & Partner

(57) **Abstract**

The present invention relates to a plant operation management-support system for enabling a control station for controlling plant equipment to communicate with a host manipulation terminal, provided with a manipulation-history database for storing a manipulation-history of the manipulation terminal to be manipulated by an operator.
With the present invention, operation-manipulation efficiency of an operator in plant operation can be quantified in terms of an index-value by the combination of the screen-manipulation history, manipulation for change in the control loop and an alarm for detecting process variation. By comparing the index-values it is possible to grasp an operator's skill and to enhance operation efficiency by effecting reduction in the number of repeated manipulations.

## Description

### BACKGROUND

### Technical Field

The present invention relates to a plant operation management support system for enabling a control station for controlling plant equipment to communicate with a host manipulation terminal, provided with a manipulation-history database for storing a manipulation-history of the manipulation terminal to be manipulated by an operator.

### Related Art

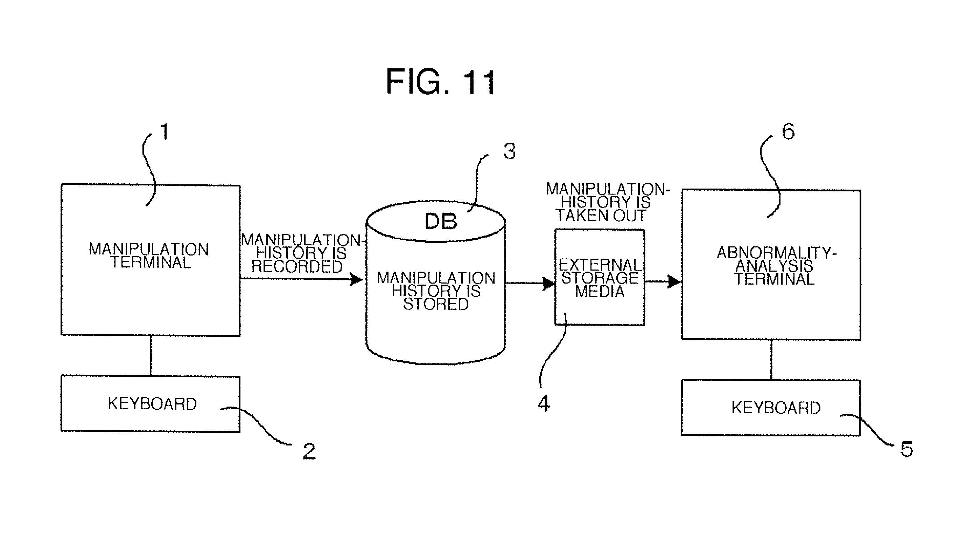

Fig. 11 is a functional block diagram showing the configuration of a plant operation management support system according to the related art by way of example. At a manipulation terminal 1 of a distributed control system, stored in a database 3, as a manipulation history of screens, are the contents of manipulation by an operator, that is, call / erase of various types of screens displaying a graphic, a trend, a control group, and so forth, together with manipulation of a control loop, including set-value change and mode change. The contents as stored include times when each manipulation is made, manipulation contents, and information on screens as targets of respective manipulations.

If abnormality occurs to the system, information on the manipulation history as stored in the database 3 is read out by an external storage media 4 upon analysis of the cause of the abnormality to be delivered to an abnormality-analysis terminal 6 to be manipulated at a keyboard 5 before analysis by use of a diagnostic application.

### [Related Art Literature]

### [Paten Document 1] JP 1997―196714A

The configuration according to the related art has problems described as follows:
(1) Information on the manipulation history concerning the screens of the distributed control system is stored and utilized only for analysis of the abnormality occurring to the system, but such information has not been put to use for any purpose other than the above; and
(2) Furthermore, as such a system was unavailable, a manipulation state had to be recorded by use of a video camera on an actual work site, and a user of the distributed control system had no choice but to carry out an analysis on his own.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any disadvantages.

It is one of illustrative aspects of the present invention to provide a plant operation management support system capable of executing manipulation analysis including screen manipulation, expressing operation-manipulation efficiency in terms of an index-value, and effecting auto-generation of manipulation sequence of an operation-work, including the screen manipulation.

According to one or more illustrative aspects of the invention, there is provided the plant operation management support system for enabling a host manipulation terminal to communicate with a control station for controlling plant equipment, provided with a manipulation-history database for storing a manipulation-history of the manipulation terminal to be manipulated by an operator, said system comprising a manipulation-history information acquisition unit for collecting information on the manipulation-history of the manipulation-history database via communications to be subsequently stored in an internal database, an event information acquisition unit for collecting event information occurred at the control station via communications to be subsequently stored in the internal database, and an index-value generation means for expressing the operator's skill in terms of an index-value by analyzing operation-manipulation by the operator on the basis of both the information on manipulation-history and the event information, stored in the internal database.

### BRIEF DESCRIPTION OF THE DRAWINGS

Fig. 1 is a functional block diagram showing one embodiment of a plant operation management support system according to the invention;
Fig. 2 is a flow chart for describing an action of a manipulation-history information acquisition unit ;
Fig. 3 is a flow chart for describing an action of an event information acquisition unit ;
Fig. 4 is a flow chart for describing an action of a screen-by-screen manipulation-count generation unit;
Fig. 5 is a flow chart for describing an action of an inter-alarm manipulation-count generation unit;
Fig. 6 is a flow chart for describing an action of an alarm-associated tag-manipulation screen-call count generation unit;
Fig. 7 is a flow chart for describing an action of an alarm-associated screen call frequency generation unit;
Fig. 8 is a flow chart for describing an action of a normal-state screen call frequency generation unit;
Fig. 9 is a flow chart for describing an action of a repeated operation-work template generation unit;
Fig. 10 is a flow chart for describing an action of an operation-work template generation unit; and
Fig. 11 is a functional block diagram showing the configuration of a plant operation management support system according to the related art by way of example.

### DETAILED DESCRIPTION OF EXEMPLARY EMBODIMENTS

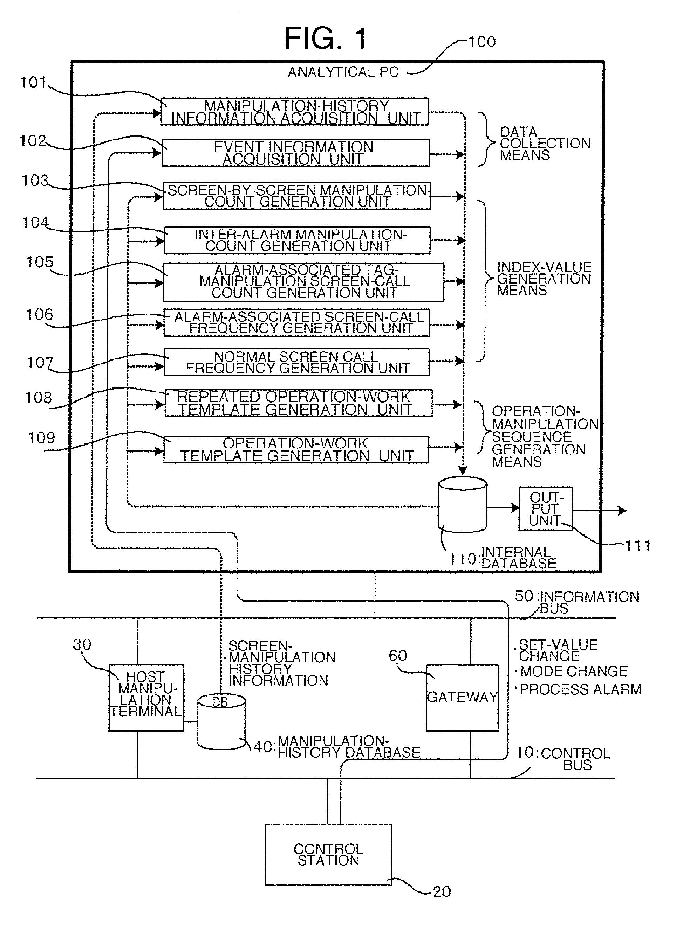

The invention is described in detail hereinafter with reference to the accompanying drawings. Fig. 1 is a functional block diagram showing one embodiment of a plant operation management support system according to the invention.

In Fig. 1, a control station 20 of a plant is in communication with a host manipulation terminal 30 via a control bus 10. Information on a manipulation history in relation to the manipulation terminal 30 that is operated by an operator is stored in a manipulation-history database 40. Stored information on a screen-manipulation history is delivered to a host analytical PC 100 by unit of communications via an information bus 50.

Event information including set-value change, mode change, process alarm, and so forth, taking place at the control station 20, is delivered to the host analytical PC 100 by unit of communications via a gateway 60 connected between the control bus 10, and the information bus 50.

The host analytical PC 100 according to the invention includes elements described as follows:
(1) a data collection means necessary for logical operation, including a manipulation-history information acquisition unit 101 and an event information acquisition unit 102;
(2) an index-value generation means for expressing operator's skill in terms of an index-value, including a screen-by-screen manipulation-count generation unit 103, an inter-alarm manipulation-count generation unit 104, an alarm-associated tag-manipulation screen-call count generation unit 105, an alarm-associated screen-call frequency generation unit 106, and a normal-state screen call frequency generation unit 107; and
(3) an operation-manipulation sequence generation means including a repeated operation-work template generation unit 108, and an operation-work template generation unit 109. Further, the host analytical PC 100 is provided with an internal database 110 and an output unit 111, each serving as a common element thereof.

The elements making up the data collection means, that is, the manipulation-history information acquisition unit 101, and the event information acquisition unit 102 acquire information on the screen-manipulation history, and event information from the screen-manipulation database 40 by unit of communications via the information bus 50, and via the gateway 60, respectively, to be thereby stored in the internal database 110.

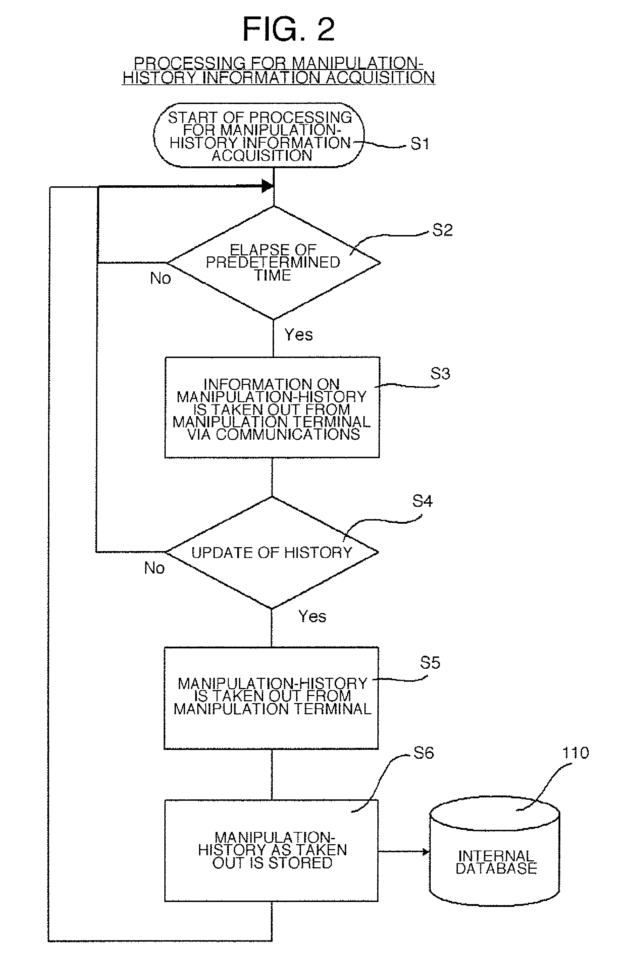

Each of the elements 103 to 109, making up the index-value generation means and the operation-manipulation sequence generation means, reads the information on the manipulation-history, and the event information, which are stored in the internal database 110, thereby executing a predetermined logical operation, and storing information on results of the logical operation in the internal database 110. The information on the results of the logical operation, as stored, is outputted from the output unit 111 to the outside so as to be put to use. The contents of processing by each of the elements 102 to 109 are described hereinafter with reference to flow charts shown in Figs. 2 to 10, respectively.

Fig. 2 is a flow chart for describing an action of the manipulation-history information acquisition unit 101. Upon start of processing for manipulation-history information acquisition in step S1, the elapse of predetermined time is checked in step S2, information on the manipulation-history is taken out from the manipulation terminal via communications in step S3, and updating of the history is checked in step S4.

If updated, the manipulation-history is taken out from the manipulation terminal in step S5, and the manipulation-history as taken out is stored in the internal database 110 in step S6, whereupon the processing reverts to the step S2, looping those steps described as above.

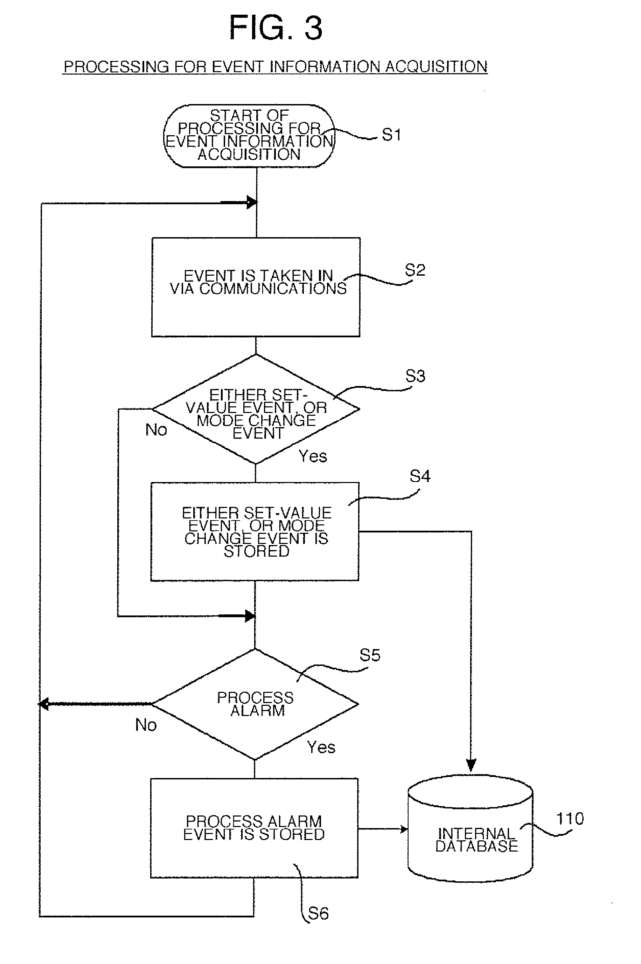

Fig. 3 is a flow chart for describing an action of the event information acquisition unit 102. Upon start of processing for in step S1, an event is taken in via communications in Step S2.

In step S3, checking is made to determine if the event is either a set-value event, or a mode change event, and if so, either the set-value event, or the mode change event is stored in the internal database 110 in step S4.

In step S5, checking is made to determine if the event is a process alarm event, and if so, the process alarm event is stored in the internal database 110 in step S6, whereupon the processing reverts to the step S2, looping those steps described as above.

If the checking made in the step S3 determines that the event is neither the set-value event, nor the mode change event, the processing jumps to the step S5.

If the checking made in the step S5 determines that the event is not the process alarm event, the processing reverts to the step S2, looping those steps as above.

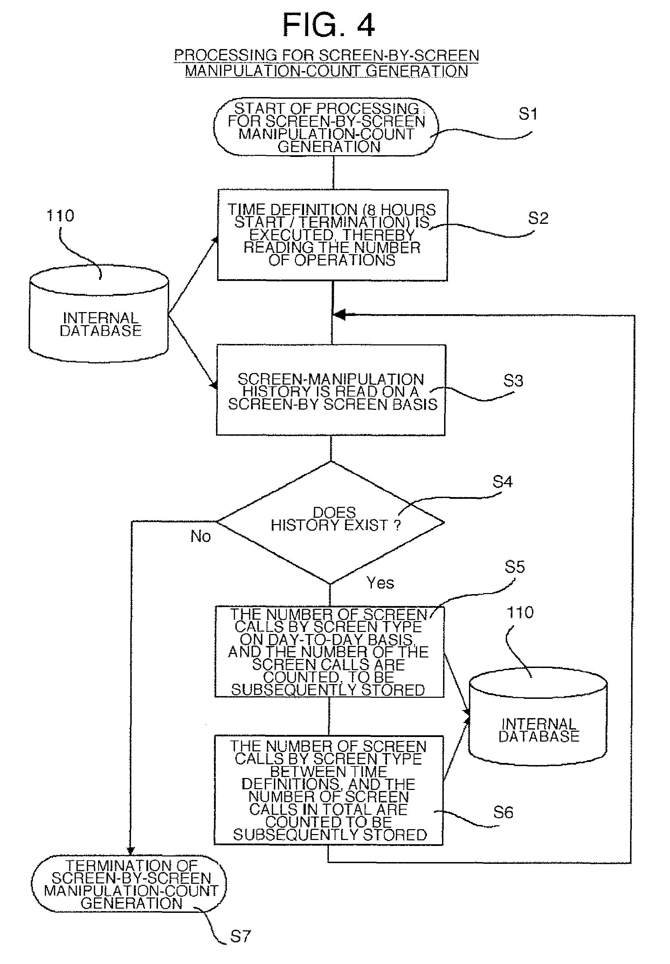

Fig. 4 is a flow chart for describing an action of the screen-by-screen manipulation-count generation unit 103. Upon start of a processing for screen-by-screen manipulation-count generation in step S1 time definition (8 hours start / termination) is executed in Step S2, thereby reading the number of operations within the time definition from the internal database 110.

The screen-manipulation history is read on a screen-by-screen basis from the internal database 110 in step S3, and if the screen as read includes the manipulation-history in step S4, the number of screen calls by the screen type is counted on a day-to-day basis to be subsequently stored in the internal database 110 in step S5.

Further, in step S6, the number of the screen calls by the screen type between the time definitions, and the number of the screen calls in total are counted to be subsequently stored in the internal database 110, whereupon the processing reverts to the step S3, looping those steps described as above. If the manipulation-history is not found out by checking made in the step 4, the processing proceeds to step 7, thereby terminating the processing for the screen-by-screen manipulation-count generation.

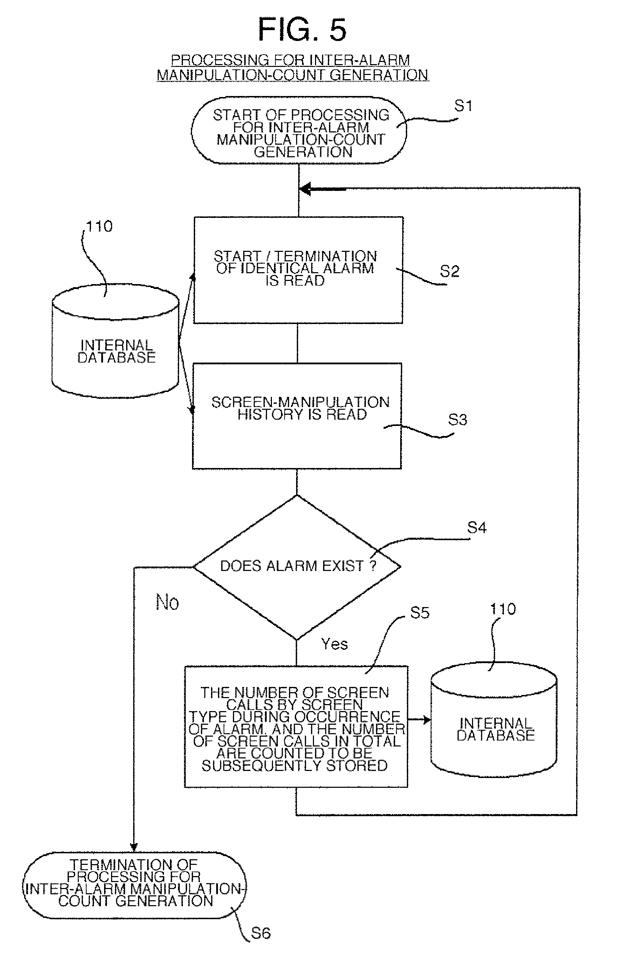

Fig. 5 is a flow chart for describing an action of the inter-alarm manipulation-count generation unit 104. Upon start of a processing for inter-alarm manipulation-count generation in step S 1, start / termination of the identical alarm is read from the internal database 110 in step S2, and the screen-manipulation history is read from the internal database 110 in step S3.

In step S4, checking is made to determine whether or not an alarm exists, and if an alarm exists, the number of the screen calls by the screen type during occurrence of the alarm, and the number of the screen calls in total are counted to be subsequently stored in the internal database 110 in step S5, whereupon the processing reverts to the step S2, thereby looping those steps described as above. If the checking in step S4 determines that no alarm exists, the processing proceeds to step S6, thereby terminating the processing for the inter-alarm manipulation-count generation.

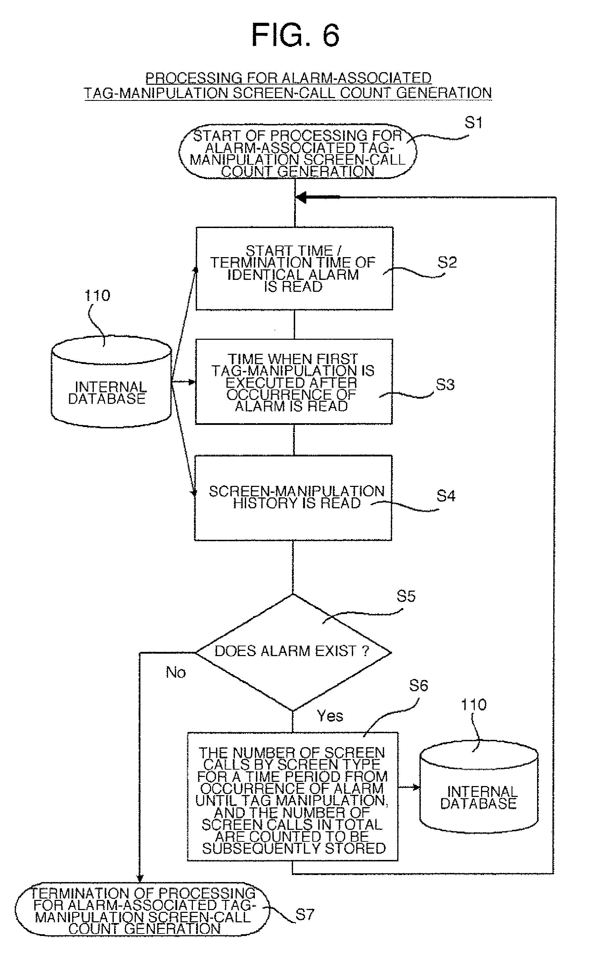

Fig. 6 is a flow chart for describing an action of the alarm-associated tag-manipulation screen-call count generation unit 105. Upon start of a processing for alarm-associated tag-manipulation screen-call count generation in step S1, a start time / a termination time of the identical alarm is read from the internal database 110 in Step S2, and a time when a first tag-manipulation is executed after occurrence of an alarm is read in step S3, thereby reading the screen-manipulation history in step S4.

Checking is made in step S5, and if an alarm exists, the number of screen calls by the screen type for a time period from occurrence of the alarm until tag manipulation, and the number of screen calls in total are counted to be subsequently stored in the internal database 110 in step S6, whereupon the processing reverts to the step S2, thereby looping those steps described as above. If the checking made in the step S5 determines that an alarm does not exist, the processing proceeds to step S7 to thereby terminate the processing for the alarm-associated tag-manipulation screen-call count generation.

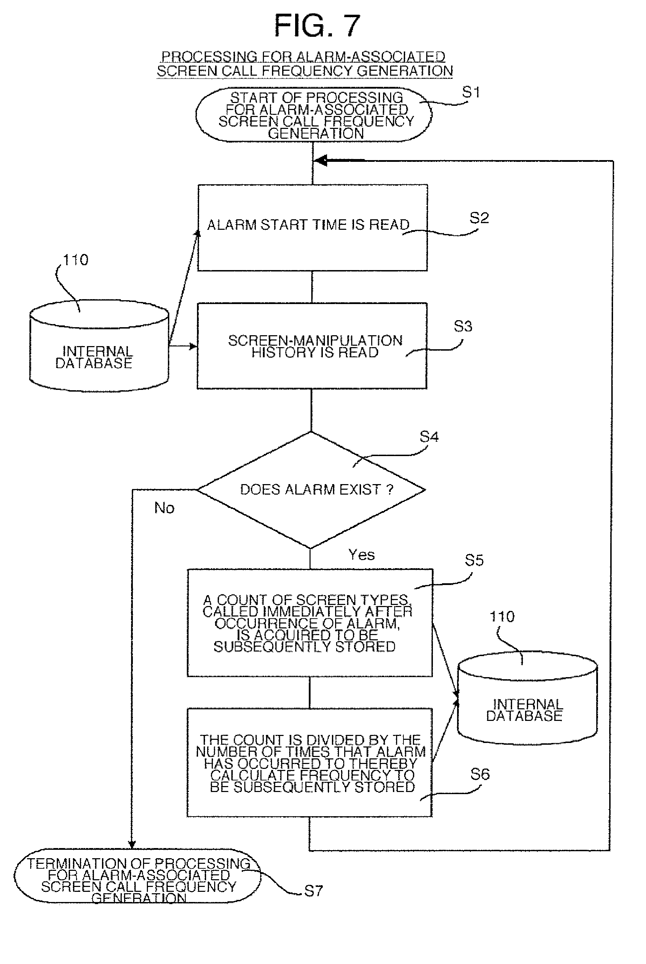

Fig. 7 is a flow chart for describing an action of the alarm-associated screen call frequency generation unit 106. Upon start of a processing for alarm-associated screen call frequency generation in step S1, an alarm start time is read from the internal database 110 in step S2, and the screen-manipulation history is read in step S3.

Checking is made in step S4, and if an alarm exists, a count of screen types, called immediately after occurrence of the alarm, is acquired to be subsequently stored in the internal database 110 in step S5, and the count is divided by the number of times that the alarm has occurred to thereby calculate frequency to be subsequently stored in the internal database 110 in step S6, whereupon the processing reverts to the step S2, looping those steps described as above. If the checking in the step S4 determines that an alarm does not exists, the processing proceeds to step S7 to thereby terminate the processing for the alarm-associated screen call frequency generation.

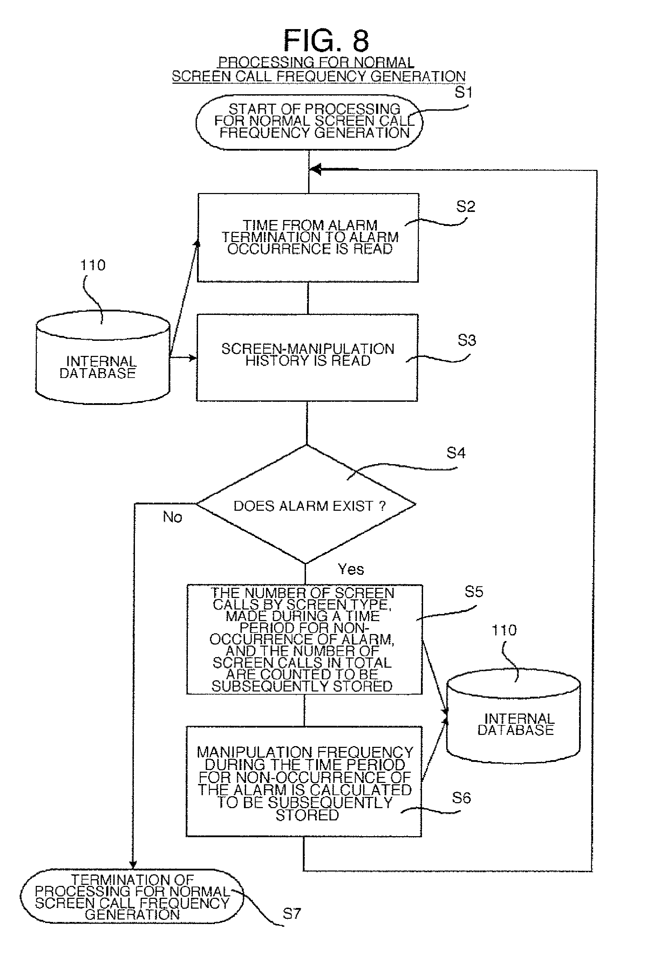

Fig. 8 is a flow chart for describing an action of the "normal-state" screen call frequency generation unit 107. Upon start of a processing for normal-state screen call frequency generation in step S1, time from alarm termination to alarm occurrence is read from the internal database 110 in step S2, and the screen-manipulation history is read in step S3.

Checking is made in step S4, and if an alarm exists, the number of screen calls by the screen type, made during a time period for non-occurrence of an alarm, and the number of screen calls in total are counted to be subsequently stored in the internal database 110 in step S5, and manipulation frequency during the time period for non-occurrence of the alarm is calculated to be subsequently stored in the internal database 110 in step S6, whereupon the processing reverts to the step S2, pooling those steps described as above. If the checking in the step S4 determines that an alarm does not exists, the processing proceeds to step S7 to thereby terminate the processing for the normal-state screen call frequency generation.

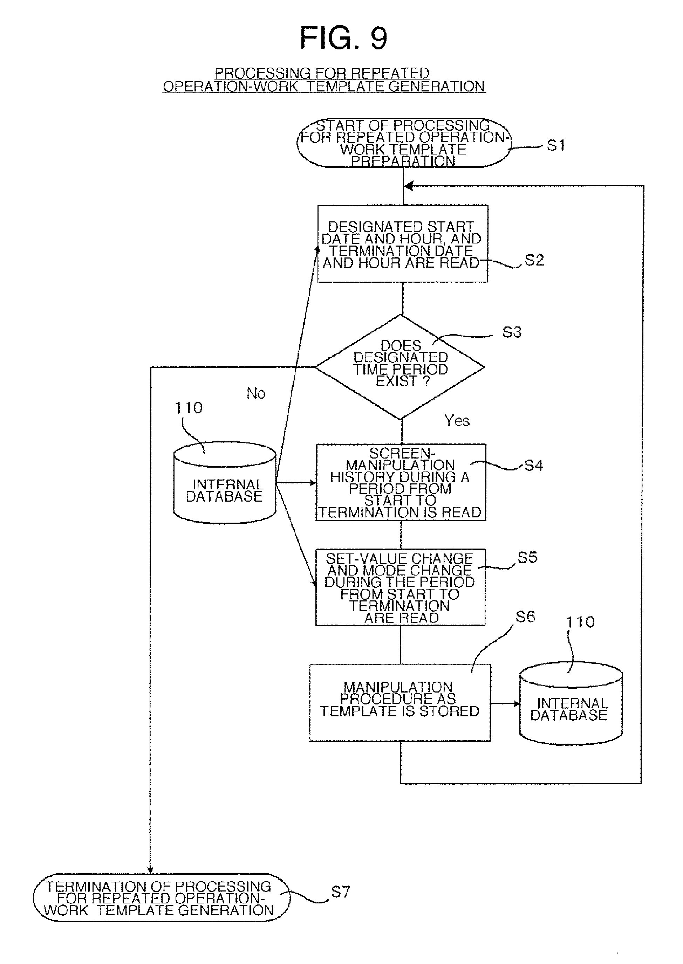

Fig. 9 is a flow chart for describing an action of the repeated operation-work template generation unit 108. Upon start of a processing for repeated operation-work template generation in step S1, designated start date and hour, and termination date and hour are read from the internal database 110 in step S2.

Checking is made in step S3, and if a designated time period exists, the screen-manipulation history during a period from start to termination is read from the internal database 110 in step S4, and set-value change and mode change during the period from start to termination are read in step S5.

In step S6, a manipulation procedure as a template is stored in the internal database 110, whereupon the processing reverts to the step S2, thereby looping those steps. If the checking in the step S3 determines that the designated time period does not exist, the processing proceeds to step S7, thereby terminating the processing for the repeated operation-work template generation.

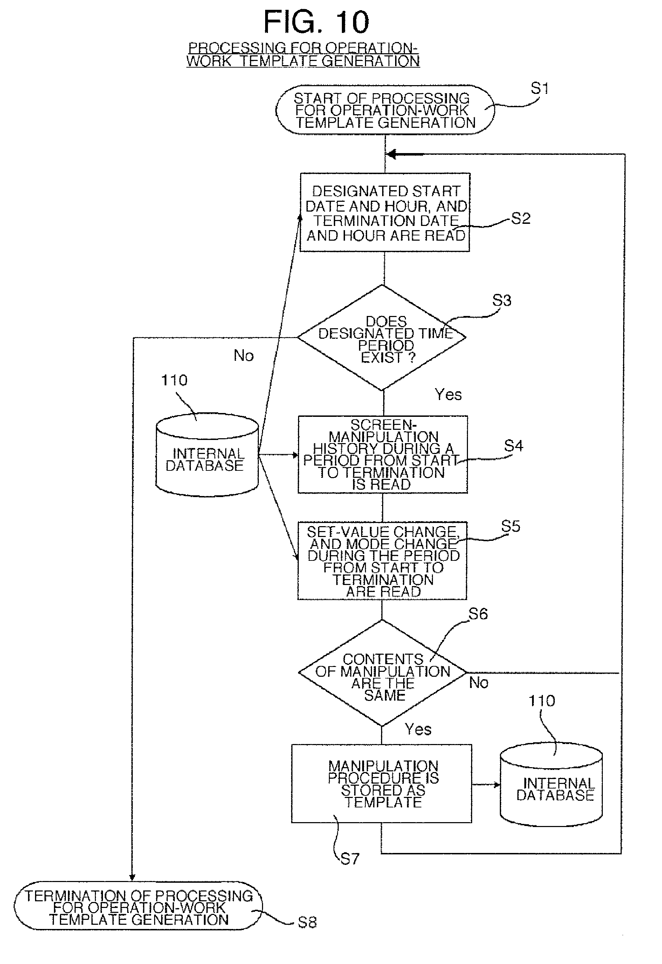

Fig. 10 is a flow chart for describing an action of the operation-work template generation unit 109. Upon start of a processing for operation-work template generation in step S1, designated start date and hour, and termination date and hour are read from the internal database 110 in step S2.

Checking is made in step S3, and if a designated time period exists, the screen-manipulation history during a period from start to termination is read from the internal database 110 in step S4, and set-value change, and mode change during the period from start to termination are read in step S5.

Checking is made in step S6, and if the contents of a manipulation are the same, the processing proceeds to step S7, thereby storing the manipulation procedure as the template in the internal database 110, whereupon the processing reverts to the step S2, thereby looping those steps described as above.

If the checking in the step S6 determines that the contents of the manipulation are not the same, the processing reverts to the step \S2, thereby pooling those steps as above. If the checking in the step S3 determines that the designated time period does not exist, the processing proceeds to step S8, thereby terminating the process for the operation-work template generation.

As described in the foregoing, with the present invention, operation-manipulation efficiency of an operator in plant operation can be quantified in terms of an index-value by the combination of the screen-manipulation history, manipulation for change in the control loop (index-value change, and mode change), and an alarm for detecting process variation.

By comparing the index-values, as quantified operation-manipulation efficiencies under various conditions, with each other, it is possible to grasp an operator's skill. Further, it is possible to enhance operation efficiency by effecting reduction in the number of repeated manipulations, or automation of the repeated manipulations. Still further, it is possible to compare respective index-values as calculated with each other on the basis of every equipment as an operation target, every shift-time, every eight hours, and every shift in charge.

On the basis of the contents of manipulations repeatedly executed from the screen-manipulation history, or manipulations during a designated time period, it is possible to realize the auto-generation of a manipulation sequence of operation-works, in the form of a template, and further, the quality of screen makeup at a manipulation terminal, a handling rate according to plant conditions, an operation procedure, and handling capability can be compared with each other. Owing to the function of the system according to the invention for enabling such comparison, it is possible to prevent erroneous manipulation in running a plant, and to realize screen makeup excellent in manipulation efficiency, and semi-automation, or automation of works in operation.

While the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

## Claims

1. A plant operation management support system for enabling a host manipulation terminal (30) to communicate with a control station (20) for controlling plant equipment, provided with a manipulation-history database for storing a manipulation-history information of the host manipulation terminal (30) to be manipulated by an operator, said system comprising:
a manipulation-history information acquisition unit (101) for collecting information on the manipulation-history of the manipulation-history database via communications to be subsequently stored in an internal database (110);
an event information acquisition unit (102) for collecting event information occurred at the control station (20) via communications to be subsequently stored in the internal database (110); and
an index-value generation means (103; 104; 105; 106; 107) for expressing the operator's skill in terms of an index-value by analyzed operation-performance on the basis of both the information on manipulation-history and the event information, stored in the internal database (110).

2. The plant operation management support system according to claim 1, wherein the index-value generation means (103; 104; 105; 106; 107) includes a screen-by-screen manipulation-count generation unit (103) for counting the number of manipulations on a screen-by-screen basis within a predetermined time period to be subsequently stored in the internal database (110).

3. The plant operation management support system according to claim 1, wherein the index-value generation means (103; 104; 105; 106; 107) includes an inter-alarm manipulation-count generation unit (104) for counting the number of inter-alarm manipulations for a time period from occurrence of the identical alarm in the event information to recovery thereof, to be subsequently stored in the internal database (110).

4. The plant operation management support system according to claim 1, wherein the index-value generation means (103; 104; 105; 106; 107) includes an alarm-associated tag-manipulation screen-call count generation unit (105) for counting the number of calls for a screen (a tag-manipulation screen) up to manipulation of corresponding tags between alarms in a time period from occurrence of the identical alarm to recovery thereof to be subsequently stored in the internal database (110).

5. The plant operation management support system according to claim 1, wherein the index-value generation means (103; 104; 105; 106; 107) includes an alarm-associated screen-call frequency generation unit (106) for calculating screen call frequency between alarms from occurrence of an alarm to recovery thereof to be subsequently stored in the internal database (110).

6. The plant operation management support system according to claim 1, wherein the index-value generation means (103; 104; 105; 106; 107) includes a normal-state screen call frequency generation unit (107) for calculating screen call frequency during a normal operation.

7. A plant operation management support system for enabling a host manipulation terminal (30) to communicate with a control station (20) for controlling plant equipment, provided with a manipulation-history database for storing a manipulation-history information of the host manipulation terminal (30) to be manipulated by an operator, said system comprising:
a manipulation-history information acquisition unit (101) for collecting information on the manipulation-history of the manipulation-history database via communications to be subsequently stored in an internal database (110);
an event information acquisition unit (102) for collecting event information occurred at the control station (20) via communications to be subsequently stored in the internal database (110); and
an operation-manipulation sequence generation means (108; 109) for automatically generating operation-manipulation sequence including screen-manipulation on the basis of both the information on manipulation-history and the event information, stored in the internal database (110).

8. The plant operation management support system according to claim 7, wherein the operation-manipulation sequence generation means (108; 109) includes a repeated operation-work template generation unit (108) for expressing identical contents of manipulations between alarms in the form of a template for a time period from occurrence of the identical alarm to recovery thereof.

9. The plant operation management support system according to claim 7, wherein the operation-manipulation sequence generation means (108; 109) includes an operation-work template generation unit (109) for expressing identical contents of manipulations between alarms in the form of a template within a designated time period.
